# EUROPEAN PATENT APPLICATION

(11) **EP 4 674 825 A1**
(43) Date of publication of application: **07.01.2026**
(21) Application number: 24186261.4
(22) Date of filing: 03.07.2024
(51) Int. Cl.: C04B 20/04, C04B 28/02, C04B 28/04, C04B 28/06, C04B 103/00

(54) **METHOD FOR MANUFACTURING COMPOSITE CEMENT**

(71) Applicant: Heidelberg Materials AG, 69120 Heidelberg (DE)
(72) Inventor: SHI, Zhenguo, 69120 Heidelberg (DE); DIENEMANN, Wolfgang, 69120 Heidelberg (DE); ULLRICH, Patrick, 69120 Heidelberg (DE); BOLTE, Gerd, 69120 Heidelberg (DE)
(74) Representative: Zellentin & Partner mbB Patentanwälte

(57) **Abstract**

Method for manufacturing composite cement, wherein a supplementary cementitious material is obtained from a marine sediment deposit fed by erosion of volcanic rock to form sedimented pozzolan by dredging the sediment deposit, dewatering the dredged sedimented pozzolan to a water content of below 20 wt.-% with respect to the total weight of sedimented pozzolan and water, washing the sedimented pozzolan with fresh water to a chloride content below 0.2 wt.-% with respect to the total solids, and drying to provide the supplementary cementitious material, and mixing the supplementary cementitious material with a hydraulic cement to provide the composite cement, as well as use of the obtained supplementary cementitious material for making composite cements and supplementary cementitious material and composite cement obtainable by the method or use.

## Description

The present invention relates to a method for manufacturing composite cement, a use of sedimented pozzolan as supplementary cementitious material for composite cement, and a supplementary cementitious material as well as a composite cement comprising the sedimented pozzolan.

Cement industry is increasingly relying on supplementary cementitious materials (abbreviated SCM) to lower CO₂ emissions and enhance concrete durability. However, the availability of traditional SCM from industrial byproducts fly ash and granulated blast-furnace slag is declining, making it necessary to explore new materials. One promising SCM that is available in large volumes worldwide is natural pozzolan. The use of natural pozzolan as SCM dates back centuries, with evidence of their use in ancient Roman concrete structures. The natural pozzolan offers various benefits to the concrete industry, including improving the long-term durability of concrete by, for example, mitigating alkali-silica reaction (abbreviated ASR) expansion and increasing resistance to sulfate attack. However, the high water demand of most natural pozzolans can negatively impact the workability of concrete, which remains a crucial factor for wide field applications. Only few natural pozzolans with good pozzolanic reactivity exhibit low water demand, one such low-water-demand natural pozzolan derived from hyaloclastite is described in US 10,745,321 B2. However, hyaloclastite is commonly mixed with other rock types like breccia and basalt, each with varying size fractions and proportions. This results in significant heterogeneity in the product, making it necessary to invest in sorting, crushing, screening, and mixing processes to ensure sufficient quality. Another low-water-demand pozzolan with high reactivity is calcined clay. Clay designates hydrous aluminum phyllosilicates possibly containing variable amounts of cations from iron, magnesium, alkali metals, alkaline earth metals, and others, including kaolinite, montmorillonite, illite, etc. These clay minerals are not reacting like a pozzolan, and clay minerals have a high water demand. To obtain a reactive pozzolan, a heat treatment at high temperatures from 300 to over 1000 °C, mostly from 600 to 950 °C is needed. The heat treatment negates some of the energy and CO₂ emission savings achieved.

Surprisingly it was now found that sedimented pozzolans which originate from erosion of volcanic rock show a very suitable composition for use as SCM. Previous research on marine sediments mostly aimed at a use as aggregate replacement, i.e., to obtain sand. However, it was also reported that dredged sediment from Dunkirk harbor showed enhanced strength over the same amount of limestone in composite cement, see M. Amar et al., "From dredged sediment to supplementary cementitious material: characterization, treatment, and reuse", Int. J. of Sediment Research, 2021, available at https://hal.science/hal-03178700, and the citations therein. The reactivity of the tested sediment was low, however.

In contrast, sedimented pozzolans from deposits fed by erosion of volcanic rock, so that the content of X-ray amorphous phase(s) is high while amounts of quartz and calcium carbonates are low, provide a novel low-water-demand natural pozzolan. This material differs from natural pozzolans of volcanic origin mined onshore like hyaloclastite primarily in terms of appearance and geological formation conditions, although the materials may have the same volcanic origin and may be similar in terms of chemistry and mineralogy. Quite importantly, the marine sediment has undergone size classification and/or size reduction, so that particle size is typically < 2 mm, resulting in high homogeneity and reducing the necessity for extensive sorting, crushing, screening and mixing processes. In addition to its low water demand characteristics, the marine sediment fed by erosion of volcanic rock exhibits remarkable pozzolanic reactivity. This feature sets it apart from the other sea-dredged materials used for aggregate and SCM, as reported in the literature. Unlike clay it does not need calcination.

The novel natural pozzolan is characterized by the following:
- dredged from marine sediment
- high pozzolanic reactivity, i.e., relative compressive strength after 7 days - activity index test according to EN 450 - above 75 %
- low water demand and good workability, i.e., consistency measured as water demand according to EN 196-3 on a blend according to EN 450, < 32 % and/or as mortar spread according to EN 413-2, freshly prepared mortar spread > 140 mm and 60 minutes after mortar mixing > 130 mm
- particle size naturally classified and/or reduced to < 2 mm
- high homogeneity
- absence or very low amount of clay minerals obviating a need for calcination
- only dewatering and washing to remove the chloride coming with the seawater from the surface is necessary to provide the pozzolan.

A too high water demand (> 32 %) or too low mortar spread (< 140 mm) can often not be remedied with admixtures, or the cost of remedying it by adding excessive admixtures would be prohibitively high. Therefore, if a composite cement does not meet these two expectations, it is most probably to be deemed unacceptable by the end users.

Thus, the objects of providing reactive supplementary cementitious material and optimizing the manufacturing of composite cements are solved by a method for manufacturing composite cement, wherein a supplementary cementitious material is obtained from a marine sediment deposit fed by erosion of volcanic rock and comprising with respect to the total solids at least 50 wt.-% X-ray amorphous material, not more than 5 wt.-% quartz, not more than 30 wt.-% feldspars, not more than 20 wt.-% pyroxenes, and having a chemical composition determined by XRF analysis with:
from 40 to 60 wt.-% SiO₂,
from 7 to 20 wt.-% Al₂O₃,
from 5 to 20 wt.-% Fe₂O₃,
from 3 to 15 wt.-% CaO, and
from 1 to 10 wt.-% MgO
by dredging the sediment deposit, dewatering the dredged sedimented pozzolan to a water content of below 20 wt.-% with respect to the total weight of dredged sedimented pozzolan and water, washing the dredged sedimented pozzolan with fresh water to a chloride content below 0.2 wt.-% with respect to the total solids,
and drying to provide the supplementary cementitious material, and mixing the supplementary cementitious material with a hydraulic cement to provide the composite cement. The problem is also solved by a use of sedimented pozzolan as supplementary cementitious material for a composite cement, wherein a marine sediment deposit fed by erosion of volcanic rock and comprising with respect to the total solids at least 50 wt.-% X-ray amorphous material, not more than 5 wt.-% quartz, not more than 30 wt.-% feldspars, not more than 20 wt.-% pyroxenes, and having a chemical composition determined by XRF analysis with:
   from 40 to 60 wt.-% SiO₂,
   from 7 to 20 wt.-% Al₂O₃,
   from 5 to 20 wt.-% Fe₂O₃,
   from 3 to 15 wt.-% CaO, and
   from 1 to 10 wt.-% MgO
is dredged and the dredged sedimented pozzolan is
   - dewatered to a water content of below 20 wt.-% with respect to the total weight of sedimented pozzolan and water,
   - washed to a chloride content below 0.2 wt.-% with respect to the total solids, and
   - dried to provide the supplementary cementitious material,
and the supplementary cementitious material is mixed with a hydraulic cement to provide the composite cement. The object is still further achieved by a supplementary cementitious material obtainable from a marine sediment deposit fed by erosion of volcanic rock and comprising with respect to the total solids at least 50 wt.-% X-ray amorphous material, not more than 5 wt.-% quartz, not more than 30 wt.-% feldspars, not more than 20 wt.-% pyroxenes, and having a chemical composition determined by XRF analysis with:
   from 40 to 60 wt.-% SiO₂, from 7 to 20 wt.-% Al₂O₃,
   from 5 to 20 wt.-% Fe₂O₃,
   from 3 to 15 wt.-% CaO, and
   from 1 to 10 wt.-% MgO
by dredging the sediment deposit, dewatering the dredged sedimented pozzolan to a water content of below 20 wt.-% with respect to the total weight of dredged sedimented pozzolan and water, washing the dredged sedimented pozzolan with fresh water to a chloride content below 0.2 wt.-% with respect to the total solids, and drying to provide the supplementary cementitious material and by a composite cement comprising this supplementary cementitious material and obtainable by the method or use according to the invention.

The sedimented pozzolan usually has a particle size distribution determined by laser granulometry with a maximum particle size of 2 mm and a D₅₀ below 700 µm but not below 100 µm. In contrast to a use as replacement of fine aggregate, i.e., sand, in the prior art, the fine particles in the dredged sedimented pozzolan are beneficial for the use as SCM and not removed according to the present invention.

The dredged sedimented particles are rounded and have no sharp edges, but they are normally not spherical. Typical aspect ratios are smaller than 2.

The chemical and mineralogical composition of the sedimented pozzolan are determined by the volcanic rock from which they derive. Erosion by the action of the weather on the volcanic rock causes disintegration and transport of the small parts generated towards the coast and into the sea. Particles are additionally disintegrated and rounded during transport by, e.g., glaciers, rivers, and streams. For the method and use according to the invention it is important that sediment deposits in the sea are chosen, which have been fed from mainly volcanic rock with high amounts of reactive glass classified as X-ray amorphous. The X-ray amorphous phase amount in such sedimented pozzolan is at least 50 wt.-% with respect to the total solids. Preferably, it is at least 55 wt.-%, and most preferred at least 60 wt.-%. Furthermore, the sedimented pozzolan should have a low quartz content of not more than 5 wt.-%, preferably not more than 3 wt.-%, most preferred not more than 1 wt.-%. It is also necessary that feldspars and pyroxenes contents are low, i.e., not more than 30 wt.-% feldspars and not more than 20 wt.-% pyroxenes are present. Preferably, the sediment comprises not more than 26 wt.-% feldspars and/or not more than 18 wt.-% pyroxenes, most preferred not more than 22 wt.-% feldspars and/or not more than 16 wt.-% pyroxenes.

The chemical composition of the sedimented pozzolan is dominated by SiO₂ with substantial amounts of Al₂O₃, Fe₂O₃, CaO, and MgO:
from 40 to 60 wt.-% SiO₂, preferably from 45 to 55 wt.-%,
from 7 to 20 wt.-% Al₂O₃, preferably from 10 to 18 wt.-%,
from 5 to 20 wt.-% Fe₂O₃, preferably from 10 to 18 wt.-%,
from 3 to 15 wt.-% CaO, preferably from 5 to 12 wt.-%, and
from 1 to 10 wt.-% MgO, preferably from 3 to 8 wt.-%,
all calculated with regard to the loss on ignition at 1050 °C free total weight of the solids, i.e., the weight after heating to 1050 °C. The sedimented pozzolan can also comprise TiO₂, Na₂O, and/or K₂O, typically in amounts of:
   from 1 to 10 wt.-% TiO₂, preferably from 2 to 5 wt.-%, and/or
   from 1 to 10 wt.-% Na₂O, preferably from 2 to 5 wt.-%, and/or
   from 0.5 to 2 wt.-% K₂O, preferably from 0.8 to 1.5 wt.-%.

The remainder is composed of traces of, e.g., MnO, SOs, P₂O₅, chloride, etc. Such pozzolanic sediment deposits are found abundantly, e.g., at the coasts of Iceland and in Colombia.

The first step of the method according to the invention and for obtaining the supplementary cementitious material is dredging of the sedimented pozzolan, usually, during dredging a harbor or estuary. The amount of such dredged sediments is high and providing a useful application for the millions of tons of material is a substantial advantage of the present invention.

The next steps are dewatering and washing for chloride removal. Normally, the dredged sedimented pozzolan is dewatered first, e.g., by piling it into a heap in a place where the water can simply run off. Some of the water typically already runs off during transport to the shore, beginning as soon as the dredging moves the sediment above water level, i.e., during lifting onto the ship or platform and on the ship or transport belt while transporting the material to the shore. There it is usually piled into one or more heaps. Then, the dredged sedimented pozzolan is washed to reduce the chloride content to below 0.2 wt.-%, preferably below 0.1 wt.-%, more preferably below 0.05 wt.-%. Usually, the washing is performed by piling the dredged sedimented pozzolan in a heap and simply adding fresh water (i.e., water containing much less salts than sea water but not necessarily water suitable for drinking) on top of the heap. The washing water runs through the heap and off from its bottom. A typical resulting water content of the sedimented pozzolan after washing and water run off ranges from 8 to 12 wt.-% with respect to the combined weight of pozzolan and water. Theoretically, it is possible to leave a heap in the open until enough rain has fallen, but that takes a long time, normally too long. It would also be possible to apply adapted devices for washing, e.g., also allowing a recycling of the washing water, in the chloride removal step, but that would substantially increase effort and investment.

After dewatering and washing, the dredged sedimented pozzolan is dried to provide the supplementary cementitious material. Usually, the dredged sedimented pozzolan is heated to a temperature from 70 to 250°C, preferably from 80 to 130°C, until the water content is below 1 wt.-%, preferably below 0.5 wt.-%.

The supplementary cementitious material obtained like that can be used to make composite cements by mixing with a hydraulic cement. It can also be used for manufacturing hydraulically hardening building materials, especially concrete.

Depending on the particle size distribution (abbreviated PSD) of the sedimented pozzolan and the desired PSD of the SCM in the specific composite cement, the sedimented pozzolan can be ground to reduce the sizes to the desired PSD. Typically, the supplementary cementitious material has or is ground to a particle size distribution determined by laser granulometry with a D₉₀ < 90 µm and preferably D₉₀ < 60 µm and more preferably D₉₀ < 40 µm. The Rosin-Rammler slope n is preferably in the range from 0.6 to 1.4, most preferred from 0.7 to 1.2.

Grinding takes place in a manner and in devices known per se, preferably after the dewatering and washing for chloride removal. Furthermore, grinding aids can be added. Useful are for example but not limited to alkanolamines like monoethanolamine, diglycolamine, diethanolamine, diisopropanolamine, methyldiethanolamine, triethanolamine, triisopropanolamine, and diethanol-isopropanolamine.

It is a major advantage of the SCM used according to the invention that much less grinding is needed for the offshore material compared to a similar material mined in a quarry onshore. Material from a quarry normally has bigger sizes before grinding, often needing an additional crushing, sorting and more time and energy for grinding. As mentioned before, onshore material can comprise a mixture of materials from different eruptions and in different erosion states. For example, volcanic rock found on Iceland is classified as breccia or basalt. The sedimented pozzolan is formed by clastic sedimentation in which the mechanically deposited material is pre-classified by erosion, transportation and deposition by water, wind, and/or glaciers. This results in a high X-ray amorphous content. The onshore material can have any amount from almost no X-ray amorphous content up to about 80 wt.-%. This variability necessitates tedious quality control for onshore materials, as well as extensive sorting, crushing, and screening which the offshore material does not need.

The final step of the method and use according to the invention is a mixing or blending with hydraulic cement. The usual devices are suitable. Mixing can also take place by co-grinding the SCM and hydraulic cement clinker, possibly also with other desired components.

Typically, the hydraulic cement is Portland cement, calcium sulfoaluminate cement, or a belite binder. Preferred is Portland cement.

Preferably, the composite cement contains from 1 to 95 wt.-% supplementary cementitious material (obtained) according to the invention and from 5 to 99 wt.-% hydraulic cement, most preferred from 6 to 55 wt.-% supplementary cementitious material (obtained) according to the invention and from 45 to 94 wt.-% hydraulic cement, wherein the sum of all components in the composite cement including further components is 100 wt.-%.

A preferred fineness of the composite cement, with or without other materials, is a D₉₀ ≤ 90 µm and preferably ≤ 60 µm. The Rosin-Rammler Parameter (slope) n can vary from 0.6 to 1.4, preferably from 0.7 to 1.2. A typical Blaine fineness ranges from 2000 to 10000 cm²/g, preferably from 3000 to 9000 cm²/g, most preferred from 4000 to 8000 cm²/g.

The composite cement or a hydraulic building material made with it like concrete can comprise admixtures and/or additives, for example but not limited to admixtures like retarders, dispersants, defoaming agents, air-entraining agents, water reducing agents, superplasticizers, set accelerators, strength enhancers, and/or additives like pigments, fibers, and any mixture of two or more of the mentioned admixtures and additives. If admixtures and/or additives are added, they are used in the amounts known per se and adjusted according to need as usual.

Herein, clinker designates a sinter product obtained by burning a raw material at elevated temperature and containing at least one hydraulic phase. Burning means a change of one or more properties of the starting material such as chemistry, crystallinity, phase composition, spatial arrangement and bonds of lattice atoms which is brought about by a supply of thermal energy. The starting material may be a single material, but usually it is a mixture. The starting material is typically finely ground and then designated as raw meal. The starting material may contain mineralizers, which are substances decreasing the temperature necessary for melting and/or act as fluxes and/or enhance clinker formation e.g., by forming solid solutions or stabilization of phases. Mineralizers can be part of the starting material components or be added as separate component.

Cement designates a material that, after mixing with an aqueous liquid to form a paste, is able to develop mechanical strength by hydraulic reaction. Thus, cement mostly denotes a clinker ground with or without further components, but also mixtures like super-sulfated cement, geopolymer binder, and hydraulic materials not obtained by sintering like a dicalcium silicate obtained by hydrothermal treatment. Composite cement means a mixture containing cement and a supplementary cementitious material. A cement or composite cement is usually used adding water or another liquid and mostly also aggregate. Typically, admixtures and/or additives are added to the cement and/or the paste.

Hydraulically hardening building material means a wet mixture that is able to harden hydraulically and comprises a cement or composite cement as well as optionally any other addition contained to adjust the properties like final strength, workability of the wet mixture and strength development properties, to the intended use of the building material. For example, a concrete used to build a bridge needs other properties than a screed for casting a floor or a mortar for laying bricks.

Building structure denotes the hardened building material, e.g., a precast concrete element or a floor or a bridge part from cast-in-place concrete.

The composite cement made according to the invention is useful for all applications where known cements are used. It can replace Portland cement and other cements according to DIN EN 197-1 and DIN EN 197-5. Possible applications are, for example but not limited to, ready mix concrete, cast-in-place concrete, repair mortar, precast concrete, earth-dry concrete, self-levelling floor screed and shotcrete application.

The composite cement made according to the invention can be used in blends with any constituents specified in DIN EN 197-1, like limestone, ground granulated blast-furnace slag (GGBS), siliceous fly ash, calcareous fly ash, silica fume, calcined pozzolan, burnt shale, and other latent hydraulic and/or pozzolanic materials. If such constituents are added to the composite cement they are used in the appropriate fineness, i.e., in ground form unless they are fine enough per se like fly ash. It is also possible to co-grind constituents, which are not ground or not ground fine enough, with the cement clinker and/or the SCM. Preferred amounts of these further constituents are as follows: latent hydraulic materials such as GGBS from 0 to 49 % by weight, mineral fillers like limestone from 0 to 20 % by weight, pozzolanic materials like siliceous fly ash from 0 to 43 % by weight, for burnt shale from 0 to 29 % by weight, and other rock flours from 0 to 5 % by weight. When other constituents described in DIN EN 197-1 are present, the preferred amount of the supplementary cementitious material (obtained) according to the invention ranges from 1 to 49 wt.-%, more preferred from 6 to 49 wt.-%, and the preferred amount of the hydraulic cement ranges from 20 to 99 wt.-%, more preferred from 45 to 94 wt.-%.

In one preferred embodiment, the composite cement contains one or more alkali sulfates, one or more alkali carbonates or both. The alkali is preferably sodium and/or potassium. Suitable amounts range from 0 to 5 wt.-%, preferably from 0.3 to 2 wt.-%, with respect to the total composite cement weight. Alkali sulfate(s) and carbonate(s) act as early strength enhancers, i.e., they accelerate the early compressive strength development.

The invention will be illustrated further with reference to the examples that follow, without restricting the scope to the specific embodiments described. The invention includes all combinations of described and especially of preferred features that do not exclude each other.

If not otherwise specified any amount in % or parts is by weight and in the case of doubt referring to the total weight of the composition/mixture concerned. A characterization as "approximately", "around" and similar expression in relation to a numerical value means that up to 10 % higher and lower values are included, preferably up to 5 % higher and lower values, and in any case at least up to 1 % higher and lower values, the exact value being the most preferred value or limit. The term "substantially free" means that a particular material is not purposefully added to a composition and is only present in trace amounts or as an impurity. As used herein, unless indicated otherwise, the term "free from" means that a composition does not comprise a particular material, i.e., the composition comprises 0 weight percent of such material.

### Example 1

Sedimented pozzolan was dredged from the seabed at the coast of Iceland using specialized suction pumps. The collected material was flushed in a barrel with fresh water in a weight ratio of 1:20 (dredged sedimented pozzolan:fresh water). After settling of the dredged sedimented pozzolan, the colorless water above the dredged sedimented pozzolan was poured off and the dredged sedimented pozzolan was dried in an oven at 105°C. The grain size distribution was determined and is listed in table 1. Afterwards, the material was ground to a Rosin-Rammler position parameter of between 16.5 and 16.7 µm and a slope n of between 0.76 and 0.77, measured with a Mastersizer (Malvern Panalytical Ltd.) to provide the sample "offshore pozzolan".

### Comparison example 2

A pozzolan from the same volcanic eruption found onshore was mined in the mountains of Iceland, crushed, and classified using a 10 mm sieve. The residue was not further used due to its predominantly basalt composition. Subsequently, the fraction < 10 mm was dried. The grain size distribution was determined and is listed in table 1. Afterwards, the material was ground to a Rosin-Rammler position parameter of between 16.5 and 16.7 µm and a slope n of between 0.76 and 0.77, measured with a Mastersizer (Malvern Panalytical Ltd.) to provide the sample "onshore pozzolan".

**Table 1: screen analysis**

| Vol.-% passing | offshore pozzolan | onshore pozzolan |
|---|---|---|
| 16 mm | 100 | 100 |
| 8 mm | 100 | 96.3 |
| 4 mm | 100 | 73.4 |
| 2 mm | 100 | 53.5 |
| 1 mm | 99.1 | 37.7 |
| 0.5 mm | 89.3 | 25.0 |
| 0.25 mm | 32.0 | 13.3 |
| 0.125 mm | 1.1 | 6.1 |
| 0.063 mm | 0 | 2.4 |

Table 1 shows that the offshore pozzolan has a much narrower particle size distribution than the comparison onshore pozzolan. The erosion, transport and sedimentation resulted in a classification of the sedimented pozzolan that is beneficial for the use as SCM in composite cement. The lower maximum particle size combined with the smaller amount of fines (particles with sizes below 0.063 µm) is quite advantageous for the SCM use.

### Example 3

A composite cement was made from 25 wt.-% offshore pozzolan (SCM according to the present invention) and 75 wt.-% hydraulic cement (CEM 142.5 R). Additionally, a comparison composite cement was made with the onshore pozzolan of comparison example 2. Furthermore, comparison composite cements were made with other common pozzolans, i.e., with zeolite, calcined clay, and fly ash. Zeolite was mined and dried at 105 °C and ground to a Rosin-Rammler position parameter of 19.5 µm and a slope n of 0.82. The clay was obtained from a raw clay which was initially dried at 40 °C and afterwards calcined in a laboratory oven for 1 hour, preheated to 750 °C. After removal from the oven, the material was cooled down to room temperature and ground in a laboratory mill to achieve a Rosin-Rammler position parameter of 15.2 µm and a slope n of 0.79. Fly ash was obtained from a coal fired power plant and had a particle size distribution with a Rosin-Rammler position parameter of 34.4 µm and a slope n of 0.90.

For all composite cements as well as the CEM I 42.5 R without SCM as a reference, the compressive strength was measured according to DIN EN 196-1 and EN 450, the water demand and setting time according to DIN EN 196-3, and the consistency at different ages of a mortar following DIN EN 413-2. Furthermore, the chemical and mineralogical composition of the materials was determined by XRF and XRD analysis. Table 2 lists the chemical compositions of the used materials, determined by XRF analysis. Tables 3a to 3d list the mineralogical compositions of the used materials, determined by XRD analysis. The density and the BET (Brunauer-Emmett-Teller) area measured for the samples are presented in table 4. Table 5 shows the results of the property measurements.

**Table 2: chemical composition in wt.-%**

| | offshore pozzolan | onshore pozzolan | zeolite | calcined clay | fly ash |
|---|---|---|---|---|---|
| LOI 1050 °C | 0.57 | (+0,30) | 6.15 | 0.74 | 3.27 |
| SiO₂ | 50.90 | 47.48 | 71.4 | 65.05 | 56.55 |
| Al₂O₃ | 13.78 | 13.23 | 12.2 | 30.34 | 24.10 |
| TiO₂ | 2.86 | 1.64 | 0.15 | 0.03 | 1.15 |
| MnO | 0.20 | 0.17 | 0.04 | 0 | 0.06 |
| Fe₂O₃ | 13.88 | 12.17 | 1.27 | 2.51 | 6.61 |
| CaO | 8.56 | 11.28 | 1.52 | 0.1 | 3.73 |
| MgO | 4.79 | 11.31 | 0.42 | 0.18 | 1.87 |
| K₂O | 0.93 | 0.38 | 3.49 | 1.13 | 1.78 |
| Na₂O | 2.92 | 1.90 | 2.31 | 0 | 0.75 |
| SO₃ | 0.10 | 0.00 | 0 | 0 | 0.09 |
| P₂O₅ | 0.42 | 0.19 | 0.04 | 0.02 | 0.57 |
| total XRF | 99.91 | 99.76 | 99.1 | 100.1 | 100.53 |
| Cl⁻ | 0,009 | 0.00 | 0.00 | | 0.00 |

**Table 3a: mineralogical composition in wt.-%**

| | offshore pozzolan | | onshore pozzolan | |
|---|---|---|---|---|
| X-ray amorphous | | 61.8 | | 14.76 |
| anorthite | | 1.1 | | 7.2 |
| labradorite | | 1.3 | | 6.7 |
| andesine | | 17.9 | | 17.9 |
| diopside | | 9.8 | | 19.3 |
| augite | | 3.2 | | 21.4 |
| forsterite | | 1.7 | | 12.8 |
| ilmenite | | 0.5 | | 0.0 |
| hematite | | 0.3 | | 0.0 |
| magnesite | | 1.3 | | 0.0 |
| quartz | | 0.7 | | 0.0 |

**Table 3b: mineralogical composition of zeolite in wt.-%**

| | zeolite |
|---|---|
| X-ray amorphous | 15.4 |
| augite | 3.9 |
| quartz | 6.8 |
| zeolite phases: heulandite, analcime, clinoptilolite | 33.5 |
| albite | 10.5 |
| sanidine | 10.6 |
| orthoclase | 3.1 |
| microcline | 5.6 |
| biotite | 0.8 |

**Table 3c: mineralogical composition of fly ash in wt.-%**

| | fly ash |
|---|---|
| X-ray amorphous | 63.9 |
| anhydrite | 0.2 |
| belite | 1.0 |
| quartz | 14.1 |
| free lime | 0.3 |
| periclase | 0.4 |
| mullite | 17.2 |
| maghemite | 1.0 |
| åkermanite | 0.6 |
| gehlenite | 0.3 |
| hematite | 0.9 |

**Table 3d: mineralogical composition of raw clay and of calcined clay in wt.-%**

| | raw clay | calcined clay |
|---|---|---|
| X-ray amorphous | 3.9 | 65.5 |
| quartz | 23.1 | 27.0 |
| muscovite | 4.8 | 5.2 |
| illite | 6.6 | 2.3 |
| kaolinite | 61.6 | 0.0 |

**Table 4**

| | offshore pozzolan | onshore pozzolan | zeolite | calcined clay | fly ash |
|---|---|---|---|---|---|
| BET area [m²/g] | 3.67 | 2.92 | 27.4 | 14.1 | 1.32 |
| Density [g/cm³] | 2.85 | 2.95 | 2.30 | 2.61 | 2.36 |

It is apparent from table 2, that the chemical composition of the offshore and onshore pozzolans is very similar and typical for natural pozzolans. Other natural pozzolans like zeolite and calcined clay have similar compositions and also the common synthetic pozzolan fly ash. As can be seen in tables 3a to 3d, the offshore pozzolan (obtained) according to the present invention has less components lacking pozzolanic reactivity like pyroxene (diopside, augite) and feldspar (anorthite, labradorite, andesine). It contains a significantly higher amount of X-ray amorphous phases, similar to the amounts in fly ash and calcined clay, which generally show a high pozzolanic reactivity. Table 4 illustrates the similar densities of the materials. The BET area differs widely, however. High values like for zeolite and calcined clay are undesirable, because they typically increase water demand and bear a risk of adsorption of admixtures, necessitating higher dosages. Since the offshore pozzolan has a higher BET area than the onshore material, a disadvantage in terms of workability could be imagined.

**Table 5: measured properties (n.m.= not measurable)**

| SCM | CEM I 42.5 R | offshore pozzolan | onshore pozzolan | zeolite | calcined clay | fly ash |
|---|---|---|---|---|---|---|
| Water demand | 27.0 % | 28.0 % | 28.5 % | 37.5 % | 32.5 % | 27.5 % |
| Mortar spread 0 minutes | 199 mm | 205 mm | 203 mm | 112 mm | 181 mm | 201 mm |
| Mortar spread 15 minutes | 194 mm | 196 mm | 195 mm | 108 mm | 157 mm | 198 mm |
| Mortar spread 30 minutes | 187 mm | 193 mm | 192 mm | n.m. | 132 mm | 195 mm |
| Mortar spread 60 minutes | 175 mm | 187 mm | 190 mm | n.m. | n.m. | 190 mm |
| Compressive strength 1 day | 17.5 MPa | 12.5 MPa | 13.4 MPa | 13.3 MPa | 14.4 MPa | 9.9 MPa |
| Compressive strength 2 days | 31.6 MPa | 23.4 MPa | 23.2 MPa | 24.3 MPa | 25.0 MPa | 20.8 MPa |
| Compressive strength 7 days | 46.9 MPa | 38.5 MPa | 37.6 MPa | 41.3 MPa | 44.9 MPa | 33.8 MPa |
| Compressive strength 28 days | 57.2 MPa | 52.0 MPa | 46.0 MPa | 52.9 MPa | 64.3 MPa | 42.7 MPa |
| Relative compressive strength 1 day | 100 % | 71 % | 77 % | 76 % | 82 % | 57 % |
| Relative compressive strength 2 days | 100 % | 74 % | 73 % | 77 % | 79 % | 66 % |
| Relative compressive strength 7 days | 100 % | 82 % | 80 % | 88 % | 96 % | 72 % |
| Relative compressive strength 28 days | 100 % | 91 % | 80 % | 93 % | 112 % | 75 % |

The results in table 5 show that the method and use according to the invention provide composite cements with a higher compressive strength at 28 days than the comparison onshore pozzolan. The composite cement (made) according to the invention achieved more than 90 % of the strength (28 days) of the reference Portland cement which is significantly more than 80 % of the comparative composite cement with the onshore pozzolan. The effort needed for the composite cement made according to the invention is also much less than that for the composite cement comprising a similar pozzolan mined onshore. Water demand and mortar spread were comparable for both added SCM and within the acceptable range similar to fly ash. However, fly ash had even less strength than the onshore pozzolan and is also expected to become scarce. Calcined clay had the best strength values, but it requires energy for calcination and workability is not acceptable. The same with zeolite, strength is good, but workability is even worse than that of calcined clay. Thus, sedimented pozzolan constitutes a novel SCM with good workability and acceptable strength. Its availability is not expected to decrease, to the contrary, the use and method according to the invention provide a beneficial use of hitherto mostly landfilled material.

## Claims

1. Method for manufacturing composite cement, wherein a supplementary cementitious material is obtained from a marine sediment deposit fed by erosion of volcanic rock and comprising with respect to the total solids at least 50 wt.-% X-ray amorphous material, not more than 5 wt.-% quartz, not more than 30 wt.-% feldspars, not more than 20 wt.-% pyroxenes, and having a chemical composition determined by XRF analysis with:
from 40 to 60 wt.-% SiO₂,
from 7 to 20 wt.-% Al₂O₃,
from 5 to 20 wt.-% Fe₂O₃,
from 3 to 15 wt.-% CaO, and
from 1 to 10 wt.-% MgO
by dredging sedimented pozzolan from the sediment deposit, dewatering the dredged sedimented pozzolan to a water content of below 20 wt.-% with respect to the total weight of dredged sedimented pozzolan and water,
washing the dredged sedimented pozzolan to a chloride content below 0.2 wt.-% with respect to the total solids, and drying to provide the supplementary cementitious material,
and mixing the supplementary cementitious material with a hydraulic cement to provide the composite cement.

2. Use of sedimented pozzolan dredged from marine sediment as supplementary cementitious material for a composite cement, wherein a marine sediment deposit fed by erosion of volcanic rock and comprising with respect to the total solids at least 50 wt.-% X-ray amorphous material, not more than 5 wt.-% quartz, not more than 30 wt.-% feldspars, not more than 20 wt.-% pyroxenes, and having a chemical composition determined by XRF analysis with:
from 40 to 60 wt.-% SiO₂,
from 7 to 20 wt.-% Al₂O₃,
from 5 to 20 wt.-% Fe₂O₃,
from 3 to 15 wt.-% CaO, and
from 1 to 10 wt.-% MgO
is dredged and the dredged sedimented pozzolan is
- dewatered to a water content of below 20 wt.-% with respect to the total weight of dredged sedimented pozzolan and water,
- washed to a chloride content below 0.2 wt.-% with respect to the total solids, and
- dried to provide the supplementary cementitious material,
and the supplementary cementitious material is mixed with a hydraulic cement to provide the composite cement.

3. Method according to claim 1 or use according to claim 2, wherein the sedimented pozzolan has a particle size distribution determined by laser granulometry with maximum particle size of 2 mm and preferably a D₅₀ in the range from 100 µm to 700 µm.

4. Method according to claim 1 or 3, or use according to claim 2 or 3, wherein the sedimented pozzolan is dried by heating to a temperature from 70 to 250 °C, preferably from 80 to 130 °C, until the water content is below 1 wt.-%, preferably below 0.5 wt.-%.

5. Method according to claim 1, 3 or 4, or use according to one of claims 2 to 4, wherein the sedimented pozzolan is dewatered to a water content below 10 wt.-% and/or washed to a chloride content below 0.1 wt.-%.

6. Method according to claim 1 or one of claims 3 to 5, or use according to one of claims 2 to 5, wherein the sedimented pozzolan comprises
not more than 3 wt.-% quartz, preferably not more than 1 wt.-%, and/or
not more than 26 wt.-% feldspars, preferably not more than 22 wt.-%, and/or
not more than 18 wt.-% pyroxenes, preferably not more than 16 wt.-%.

7. Method according to claim 1 or one of claims 3 to 6, or use according to one of claims 2 to 6, wherein the sedimented pozzolan comprises:
from 45 to 55 wt.-% SiO₂, and/or
from 10 to 18 wt.-% Al₂O₃, and/or
from 10 to 18 wt.-% Fe₂O₃, and/or
from 5 to 12 wt.-% CaO, and/or
from 3 to 8 wt.-% MgO,
all amounts calculated with regard to the loss on ignition at 1050 °C free total weight of the solids.

8. Method according to claim 1 or one of claims 3 to 7, or use according to one of claims 2 to 7, wherein the sedimented pozzolan comprises from 1 to 10 wt.-% TiO₂, preferably from 2 to 5 wt.-%, and/or from 1 to 10 wt.-% Na₂O, preferably from 2 to 5 wt.-%, and/or from 0.5 to 2 wt.-% K₂O, preferably from 0.8 to 1.5 wt.-%, all calculated with regard to the loss on ignition at 1050 °C free total weight of the solids.

9. Method according to claim 1 or one of claims 3 to 8, or use according to one of claims 2 to 8, wherein the supplementary cementitious material is ground to a particle size distribution determined by laser granulometry with a D₉₀ of < 90 µm, preferably < 60 µm, most preferred < 40 µm, and/or a Rosin-Rammler slope n in the range from 0.6 to 1.4, preferably from 0.7 to 1.2.

10. Method according to claim 1 or one of claims 3 to 9, or use according to one of claims 2 to 9, wherein the composite cement contains from 1 to 95 wt.-% supplementary cementitious material and from 5 to 99 wt.-% hydraulic cement, preferably from 6 to 55 wt.-% supplementary cementitious material and from 45 to 94 wt.-% hydraulic cement, wherein the sum of all components in the composite cement including further components is 100 wt.-%.

11. Method according to claim 1 or one of claims 3 to 10, or use according to one of claims 2 to 10, wherein the composite cement contains one or more other constituents described in EN 197-1, preferably one or more of mineral fillers like limestone; pozzolanic materials like silicious fly ash, silica fume, calcined pozzolan, burnt shale; and latent hydraulic material like calcareous fly ash, ground granulated blast-furnace slag.

12. Method or use according to claim 11, wherein the composite cement comprises from 1 to 49 wt.-%, preferably from 6 to 49 wt.-% supplementary cementitious material and up to 49 % by weight of one or more other constituents described in EN 197-1, preferably from 0 to 20 wt.-% mineral fillers, and/or from 0 to 43 wt.-% or from 0 to 29 wt.-% pozzolanic materials, and/or from 0 to 49 wt.-% latent hydraulic materials.

13. Method according to claim 1 or one of claims 3 to 12, or use according to one of claims 2 to 12, wherein the hydraulic cement is Portland cement, calcium sulfoaluminate cement, or a belite binder obtained by hydrothermal treatment with subsequent tempering and/or grinding, preferably Portland cement.

14. Method according to claim 1 or one of claims 3 to 13, or use according to one of claims 2 to 13, wherein the composite cement contains up to 5 wt.-%, preferably from 0.3 to 2 wt.-%, of one or more alkali sulfate, one or more alkali carbonate, or a combination thereof.

15. Supplementary cementitious material obtainable by dredging a marine sediment deposit fed by erosion of volcanic rock and comprising with respect to the total solids at least 50 wt.-% X-ray amorphous material, not more than 5 wt.-% quartz, not more than 30 wt.-% feldspars, not more than 20 wt.-% pyroxenes, and having a chemical composition determined by XRF analysis with:
from 40 to 60 wt.-% SiO₂,
from 7 to 20 wt.-% Al₂O₃,
from 5 to 20 wt.-% Fe₂O₃,
from 3 to 15 wt.-% CaO, and
from 1 to 10 wt.-% MgO
wherein the dredged sedimented pozzolan is
- dewatered to a water content of below 20 wt.-% with respect to the total weight of dredged sedimented pozzolan and water,
- washed to a chloride content below 0.2 wt.-% with respect to the total solids, and
- dried to provide the supplementary cementitious material.

16. Composite cement comprising a dredged sedimented pozzolan and a hydraulic cement, obtainable according to the method or use of any one of claims 1 to 14.
